# EUROPÄISCHE PATENTSCHRIFT

(11) **EP 1 923 615 B1**
(45) Veröffentlichungstag und Bekanntmachung des Hinweises auf die Patenterteilung: **14.04.2010**
(21) Anmeldenummer: 07021233.7
(22) Anmeldetag: 31.10.2007
(51) Int. Cl.: F16L 13/08, B23K 1/00

(54) **Metallischer Rohrverbinder**
Metal pipe connector
Raccordement de tuyau métallique

(30) Priorität: 10.11.2006 DE 102006052978
(43) Veröffentlichungstag der Anmeldung: 21.05.2008
(73) Patentinhaber: Wieland-Werke AG, 89070 Ulm (DE)
(72) Erfinder: Werner, Rolf, 89278 Nersingen (DE); Bathray, Stefan, 89287 Bellenberg (DE)

(56) Entgegenhaltungen:
- WO-A-2005/050081
- DE-A1- 3 241 961
- DE-B- 1 288 381
- DE-C- 658 191
- DE-C- 815 741
- DE-U1- 29 800 889
- US-A- 3 334 925
- US-A- 3 430 686
- US-A- 5 333 918
- US-A- 6 079 613

## Beschreibung

Die Erfindung betrifft einen metallischen Rohrverbinder gemäß dem Oberbegriff des Anspruchs 1.

Thermisches Fügen in Form von Weich- oder Hartlöten für Kupferrohre und andere metallene Rohrwerkstoffe ist hinlänglich bekannt. Das Löten wird als Verbindungstechnik nicht nur für Kupferrohre angewandt, sondern es sind auch Methoden zum Löten von Stahlrohren bekannt.

Die Verwendung der Löttechnik als Verbindungsverfahren erweist sich in bestimmten Anwendungsgebieten als vorteilhaft; wenn Rohrleitungsenden verbunden werden sollen, die dauerhaft nicht mehr zugänglich sind, wie beispielsweise bei unter Putz liegenden oder eingebetteten Trinkwasserleitungen oder direkt im Estrich liegenden Leitungen für Fußbodenheizungssysteme. Hier weist die Kapillarlötung als rein metallene Verbindung den Vorteil auf, dass für die Dichtigkeit der Verbindung entsprechend langlebige Bauteile und Fügeverfahren verwendet werden, die auch mechanischen Beanspruchungen standhalten.

Beim Löten von klassischen ummantelten Rohren, wie beispielsweise Kupferrohren, die ein inneres metallenes Kernrohr und eine äußere Ummantelung aus thermoplastischen Kunststoffen aufweisen, wird hierzu normalerweise die äußere Ummantelung entfernt, um die Lötverbindung zwischen Metallrohraußenoberfläche und Innenoberfläche eines von außen aufgeschobenen Fittingendes herstellen zu können. Die Entfernung der Ummantelung stellt hierbei einen erhöhten Arbeitsaufwand dar. Dieses Entfernen muss zudem möglichst rückstandsfrei geschehen, um eine vollkommene Benetzung durch das Lotmaterial sicherstellen zu können.

Bei lose haftenden Wärmedämmu ngen oder Ummantelungen ist dies unter Zuhilfenahme von entsprechenden Werkzeugen mit einem geringen technischen, jedoch einem verbleibenden zeitlichen Aufwand verbunden. Derartige Ummantelungen sind beispielsweise für dünnwandige Kupferrohre aus der Druckschrift DE 102 49 454 A1 bekannt.

Andererseits sind aus der Druckschrift WO 2006/005297 A1 dünnwandige Metallrohre bekannt, die eine fest haftende Beschichtung unter Zuhilfenahme von Haftvermittlern oder funktionellen Gruppen aufweisen. Zum Verbinden der Rohre wird in der Regel die Ummantelung nicht mehr entfernt. Derartige Rohre können mit über die Ummantelung reichenden Rohrverbindern, beispielsweise mit Presswerkzeugen, verbunden werden. Beim Einsatz thermischer Verfahren bestünde die Gefahr, ein Abschmelzen der Ummantelung in Verbindung mit einem Anhaften von schmelzenden Rückständen, beispielsweise an den Kontaktflächen eines Wderstandslötgerätes, zu verursachen.

Allgemein nicht bekannt sind Lösungen, bei denen die äußere Ummantelung oder Beschichtung eines mehrschichtigen Rohres, insbesondere Installationsrohres für die häusliche Anwendung, zum Verbinden mittels eines Lötverbinders nicht entfernt werden muss.

Aus der Druckschrift DE 298 00 889 U1 ist eine Verbindungsanordnung für Edelstahlrohre ohne Ummantelung bekannt. Das Verbindungselement weist einen rohrstutzenförmigen Einsteckabschnitt auf, dessen Außendurchmesser kleiner ist als der Innendurchmesser des Edelstahlrohres. Zur mediendichten Verbindung werden zwischen Einsteckabschnitt und Edelstahlrohr Dichtringe angeordnet. Durch innen liegende Verbinder soll ein Kontakt des zu transportierenden Mediums mit einzelnen empfindlichen Schichten des Rohres an der Stirnseite verhindert werden. Auch das Anbringen einer Isolierung wird erleichtert, da im Bereich der Verbindungsanordnung der zu ummantelnde Außendurchmesser der Rohrleitung beibehalten wird, im Gegensatz zur Verwendung von auf die Rohrleitung aufsteckbaren Fittingen. Außer Dichtringen ist auch angedacht, die Verbindungselemente durch Löten oder Schweißen zu montieren. Insbesondere ist dabei vorgesehen, um den Einsteckabschnitt eines Verbindungselements umlaufend Lot anzubringen, welches aufgewickelt oder in Hülsenform auf den Einsteckabschnitt angeordnet wird.

Bei dem angewandten thermischen Fügeverfahren erfolgt nach dem Aufschieben des metallenen Rohres auf das Verbindungselement eine Wärmezufuhr von außen über das Metallrohr auf den Verbinder, bis gegebenenfalls das Lot schmilzt und so eine sichere Fügeverbindung entsteht. Diese Vorgehensweise macht zur Bedingung, dass das aufgeschobene Edelstahlrohr lediglich aus Metall besteht oder aber grundsätzlich nur aus Werkstoffen, bei denen eine direkte Erwärmung von außen keine nachträglichen Effekte wie Schmelzen, Anbrennen oder Verbrennen des Werkstoffes verursacht. Das genannte Verfahren ist daher nicht für ummantelte oder mit thermoplastischen Werkstoffen mit geringem Schmelzpunkt < 400 °C versehene Rohre anwendbar. Es besteht immer die Gefahr, die Ummantelung am Rohrende zu beschädigen.

Der Erfindung liegt daher die Aufgabe zugrunde, einen Verbinder zum thermischen Fügen von ummantelten Metallrohren weiterzubilden.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt einen metallischen Rohrverbinder mit Einsteckabschnitten zum Verbinden von Metallrohren mit polymerer Ummantelung mittels eines thermischen Fügeverfahrens ein, bei dem der Außendurchmesser eines Einsteckabschnitts kleiner ist als der Innendurchmesser des zu verbindenden Metallrohrs, wobei um den Außenumfang ein oder mehrere umlaufende Wärmeisolatoren angeordnet sind.

Die Erfindung geht dabei von der Überlegung aus, mit einem Wärmeisolator die aus Polymer bestehende Ummantelung vor thermischen Einflüssen beim Fügen der Metallrohre zu schützen, um der Gefahr einer Verbrennung oder thermischen Beschädigung der Ummantelung entgegenzuwirken. Die Verbindung der Rohre wird üblicherweise unter Zuhilfenahme eines thermischen Fügeverfahrens durchgeführt, wobei die äußere Ummantelung des metallenen Kernrohres nicht entfernt wird. In jüngerer Zeit sind zunehmend dünne Metallrohre mit vergleichsweise dicken Ummantelungen im Gespräch. Im Rahmen der Erfindung sind unter Metallrohren mit Ummantelung auch beschichtete Metallrohre oder andere mit einer fest haftenden oder losen polymeren Schicht zu verstehen.

Bei Muffenverbindungen wird hierzu also bevorzugt der Bereich des Verbinders als Zone für die Wärmezufuhr definiert, in der eine Flamme oder vorzugsweise die Kontaktflächen eines Elektrowiderstandslötgerätes positioniert werden, um Wärme in das Bauteil einzubringen. Zu beiden Seiten dieser Wärmeeinbringzone werden dann umlaufende Wärmeisolatoren angebracht, so dass die Enden der auf den Verbinder aufgesteckten Rohre nicht direkt mit der Flamme oder dem Elektrowiderstandslötgerät in Kontakt kommen können.

Bei entsprechender Materialwahl des Wärmeisolators kann die unerwünschte Wärmeabstrahlung, beispielsweise durch erhitzte Kontaktflächen eines Widerstandslötgerätes, auf die Ummantelung unterbunden werden. Sinngemäß eignet sich daher als Werkstoff für den Wärmeisolator vorzugsweise ein Werkstoff, der eine geringe Wärmeleitfähigkeit, einen hohen Schmelzpunkt oder auch einen geringen Emissionskoeffizienten für Wärmestrahlung oder eine Kombination aus diesen Eigenschaften aufweist.

Je nach Werkstoff kann die Dicke des Wärmeisolators von 0,1 Millimeter bis hin zu mehreren Millimetern reichen. Eine an Material sparende Ausführung eröffnet Kostenvorteile in der Produktion.

Für den Verbindergrundkörper eignen sich insbesondere Werkstoffe mit hoher Wärmeleitfähigkeit, wie beispielsweise Kupfer und Kupferlegierungen. Insbesondere bei Legierungen kann eine gute Zerspanbarkeit die Herstellung als Drehteil kostengünstig ermöglichen. Wichtig in diesem Zusammenhang ist, dass bereits eine geringe Wanddicke in der Größenordnung der Wanddicke des metallenen Kernrohres ausreicht, um eine einwandfreie Verbindung unter Einhaltung des zulässigen Betriebsdruckes des Rohres für die gesamte Rohrleitung aufrechtzuerhalten. Hierdurch wird der Querschnitt des Verbinders in der Größenordnung von dem Querschnitt der Rohrleitung liegen, so dass es zu keiner nennenswerten Veränderung des freien Durchmessers und damit zu keinem Einfluss von praktischer Relevanz auf Fließgeschwindigkeiten im Bereich der Rohrverbindung kommt. Die Wanddicke des Verbinders kann weiter reduziert werden, wenn höherfeste Kupferwerkstoffe oder verschiedene Stähle, unter anderem nicht rostender Stahl als Werkstoff eingesetzt werden. Insgesamt muss allerdings die Dicke des Verbinders so gestaltet sein, dass ein ausreichender Wärmtransport in die zu lötenden Bereiche gewährleistet ist und das Lot im Kapillarspalt zuverlässig verteilt wird.

Die Enden des eingesteckten Rohrverbinders werden gegebenenfalls mit einer Fase oder einer strömungsgünstigen Ausführung versehen, so dass es am Ende des Rohrverbinders beim Übergang ins Rohr zu möglichst wenig Verwirbelungen und Turbulenzen bei der Durchströmung kommt.

Zudem kann ein derart gestalteter Rohrverbinder eine veredelte Oberfläche aufweisen. Hierzu zählen beispielsweise auf der Innenoberfläche von Fertigungsrückständen gereinigte Oberflächen ebenso, wie eine leicht oxidierte oder verzinnte Innenoberfläche. Letzteres bietet sich insbesondere dann an, wenn gegenüber sauren Medien eine erhöhte Beständigkeit erreicht werden soll. Auch eine Komplettverzinnung des Bauteils ist denkbar.

Es bietet sich beispielsweise an, bei einem thermischen Fügevorgang eine Lot/Verbinder-Werkstoffkombination zu wählen, der eine gute Lötbarkeit und gute Benetzung zugrunde liegt. Hierzu eignet sich insbesondere als Werkstoff sauerstofffreies Kupfer, bekannt als Cu-DHP nach DIN EN 1057, in Verbindung mit Kupfer-Zinn-Weichloten, beispielsweise in der Zusammensetzung Cu97Sn3.

Die Verwendung dieser Werkstoffe hat zudem den Vorteil, dass die Solidustemperatur des Lotes sehr tief liegt und dadurch Werkstoffe für eine thermoplastische Beschichtung oder Ummantelung des Rohres gewählt werden können, deren Schmelztemperatur höher oder ähnlich hoch, wie die Solidustemperatur des Lotes liegt. Zweckmäßigerweise wird bei Einsatz eines Weichlotes mit Solidustemperaturen um 210 - 240 °C beispielsweise PE-RT als Werkstoff für die Ummantelung verwendet. Auch PE-RT mit einem geringen Füllstoffanteil ist zur Reduktion der Kosten verwendbar.

Für die Ummantelung ist durch die erfindungsgemäße Ausführung des Verbinders auch die Verwendung von thermoplastischen Massenkunststoffen mit hohem Schmelzpunkt ebenso denkbar, wie die Verwendung von vernetzten Werkstoffen, beispielsweise vernetztem Polyethylen.

Bei der genannten Materialwahl erweist sich als Vorteil, dass einerseits nur eine geringe Temperatur erforderlich ist, um das Lot zum Aufschmelzen zu bringen, andererseits der Werkstoff des Rohrverbinders sowie des Metallrohres aus Reinkupfer eine sehr gute Benetzbarkeit aufweist. Zudem kann die Wärmezufuhr über den Verbinder und damit indirekt auf die Innenoberfläche des Metallkernrohres schnell und, insbesondere bei Verwendung von Kupferwerkstoffen, ohne großen Wärmeleitwiderstand erfolgen. Hierdurch werden die Aufheizzeiten zum Erreichen der notwendigen Temperatur reduziert und insgesamt der Wärmeeintrag im Bereich der Verbindungsstelle minimiert, so dass ein Abschmelzen der Ummantelung komplett vermieden wird. Niedrig legierte Kupferwerkstoffe bieten ähnliche Eigenschaften wie Reinkupfer. Auch die Verwendung von Messingen oder Rotguss eignen sich in bevorzugter Weise, davon besonders die blei- und nickelfreien Werkstoffe.

Um den Lötvorgang zu erleichtern, hat es sich zudem als eine mögliche Variante erwiesen, einen Lötring, d. h. einen Torus aus Lot in einer Nut auf der Außenseite des Verbinders werksseitig anzubringen. Das Anbringen eines Lotringes oder einer Lotschnur auf der Außenseite bietet den Vorteil, dass es zu keiner Querschnittsverengung im Inneren des Verbinders kommt. Weiterhin kann der Lötring auch als Einschubanschlag für das aufzusteckende Rohr genutzt werden.

Der besondere Vorteil besteht jedoch darin, dass durch den Verbinder für das thermische Fügen von ummantelten Rohren mit metallenem Kernrohr auf das Entfernen der Ummantelung aus polymeren, insbesondere thermoplastischen Werkstoffen verzichtet werden kann. Trotz der erforderlichen Temperatureinwirkung zum Aufschmelzen des Lotes führt die Schutzwirkung des Wärmeisolators bei der Ummantelung nicht zu deren Beschädigung, Aufschmelzung oder Verbrennung.

In bevorzugter Ausgestaltung der Erfindung können die Wärmeisolatoren in einer Nut oder durch Noppen am Außenumfang arretiert sein. Die Zuführung zur Nut kann sich hierbei zu den Einsteckabschnitten hin verjüngen, so dass die Wärmeisolatoren aufgeschoben werden können und nach dem Aufschieben arretiert werden. Alternativ kann eine Arretierung über Noppen, die vor oder auch nach dem Aufschieben des Wärmeisolators angebracht werden, erreicht werden.

In vorteilhafter Ausgestaltung der Erfindung können die Wärmeisolatoren als Scheibe ausgebildet sein. Die Form der umlaufenden Scheibe kann in der Grundausführungsform rund gestaltet werden, da dies bei Verwendung von zerspanbaren Werkstoffen in der Herstellung Vorteile bietet. Alternativ kann auch ein beliebiges Polygon, beispielsweise in Form eines regelmäßigen Vieleckes, als Form für die Scheibe gewählt werden. Dies verhindert bei sonst runden Rohrverbindern ein Wegrollen, wenn beispielsweise der Beutelinhalt einer Verpackungseinheit ausgeleert wird. Eine vorteilhafte Anzahl der Ecken ist mehr als vier, vorzugsweise acht oder mehr, um eine annähernd runde Form zu erreichen. Angenähert runde Formen des Wärmeisolators bieten Vorteile beim nachträglichen Anbringen von Dämmstoff an der Verbindungsstelle, wie bei warmgehenden Leitungen vorgeschrieben. Da üblicherweise Dämmungen für Rohrleitungen einen kreisrunden Außendurchmesser aufweisen, wird durch eine annähernd runde Form des Verbinders ein gleichmäßiger Übergang der Rohrdämmung auf die Wärmedämmung des Rohrverbinders geschaffen.

Die bevorzugte Ausführungsform des Wärmeisolators ist in Form einer massiven Scheibe mit unterschiedlicher Dicke und Form ausgebildet. Vorteilhafterweise können die Wärmeisolatoren jedoch auch als geschlitzte Scheibe ausgebildet sein. In weiterer Ausgestaltung der Erfindung kann die geschlitzte Scheibe mit überlappenden Enden ausgebildet sein.

Beide Varianten eignen sich insbesondere bei der Verwendung von Materialien mit dünnen Wanddicken für den Wärmeisolator und ermöglichen so ein Herstellungsverfahren, das nicht nur auf Basis des Aufschiebens vom Einsteckabschnitt des Rohrverbinders her beruht. Die geschlitzten Scheiben können auch über den Außenumfang gestülpt werden. In einer weiteren Ausführungsform wird der Wärmeisolator mit Sollbruchstellen versehen. Dies bietet sich insbesondere bei dünnen Wärmeschutzelementen mit einer Dicke unter 1 mm an, die beispielsweise aus keramischen Werkstoffen oder relativ sprödem Spritzgussmaterial mit geringem Umformvermögen bestehen. Diese Variante ermöglicht es, nach dem Fügevorgang den Wärmeisolator zu zerbrechen und zu entfernen, wodurch die anschließende Wärmedämmung der Rohrleitung vereinfacht wird. In diesem Fall stellt die Scheibe lediglich ein Montagehilfsmittel zum thermischen Fügen dar.

Vorteilhafterweise kann der beschreibende Umkreis eines Wärmeisolators nicht mehr als 30 % größer als der Außendurchmesser der Ummantelung des zu verbindenden Metallrohres sein.

Um den Einbringvorgang des Lotes, beispielsweise in Drahtform, zu erleichtern, bietet es sich darüber hinaus an, den Außendurchmesser einer Kreisscheibe oder bei Polygonen deren beschreibenden Umkreis im Durchmesser nicht wesentlich größer zu wählen, als der jeweilige Außendurchmesser der Ummantelung des Rohres beträgt, so dass der Lotdraht auch unter größerem Winkel von jeder Seite zugeführt werden kann.

Beim Verbinden von bereits werksseitig wärmegedämmten Rohren mit einem Lötverbinder erfindungsgemäßer Ausführung hat es sich zudem als vorteilhaft erwiesen, wenn der Außendurchmesser des Wärmeisolators kleiner gewählt wird als der Außendurchmesser der Wärmedämmung des werkseitig vorgedämmten Rohres und lediglich einen Durchmesser aufweist, der die Größe der Graphitbacken eines Elektrowiderstandslötgerätes abdeckt. Hierbei sind für praktische Belange Werte von etwa 6 - 15 mm besonders geeignet.

In bevorzugter Ausführungsform der Erfindung kann sich die Dicke des Wärmeisolators in radialer Richtung nach außen verringern. Hierdurch wird die Schutzwirkung gegenüber thermischem Eintrag in der Nähe der Außenoberfläche des Rohrverbinders gegenüber der Ummantelung eines Metallrohres entsprechend erhöht.

In besonders bevorzugter Ausführungsform kann die metallische Außenoberfläche eine ganzflächige Verzinnung aufweisen. Bei derart vorbereiteten Rohrverbindern wird der Lötvorgang entsprechend vereinfacht, indem zusätzlich wenig oder kein weiteres Lötmaterial zugeführt werden muss. Auch die Benetzung während des Lötvorganges wird zusätzlich verbessert und ebenso das optische Erscheinungsbild aufgewertet.

Alternativ kann in weiterer vorteilhafter Ausgestaltung der Erfindung die metallische Außenoberfläche eine partielle Verzinnung aufweisen. Bei partieller Verzinnung kann Lotmaterial gezielt an die Stellen aufgebracht werden, bei denen eine mediendichte Verbindung besonders wichtig ist und bei denen gegebenenfalls ein von außen zugeführtes Lotmaterial durch die Kapillarwirkung nicht ausreichend verteilt wird.

In bevorzugter Ausführungsform können die Wärmeisolatoren aus einem keramischen Werkstoff bestehen. Eine etwas massivere Ausführung, beispielsweise in Form einer Keramikscheibe mit einer Dicke von etwa 1 bis 3 mm, hat neben dem Vorteil einer sehr hohen Wärmeschutzwirkung auch den Vorzug, dass hierdurch für das innen liegende Metallbauteil des Rohrverbinders ein Schutz gegenüber mechanischer Beanspruchung von außen erzielt wird. Hierdurch eröffnet sich auch in der Produktion der Vorteil, dass unter Einsatz von ausreichend stabil ausgeführten Wärmeisolatoren beispielsweise die Wanddicke des Rohrverbinders, der in der Regel aus teurerem Metall besteht, reduziert werden kann. Insbesondere bei hoch Wärme leitendem Kupfer oder Kupferlegierungen als Verbindergrundwerkstoff bietet sich diese Vorgehensweise an.

Alternativ können vorteilhafterweise die Wärmeisolatoren aus einem polymeren Werkstoff bestehen. Bevorzugt können die Wärmeisolatoren aus Teflon bestehen. Auch andere hoch schmelzende Kunststoffe, insbesondere Duroplaste, kommen dabei in Betracht.

Vorteilhafterweise können die Wärmeisolatoren eine Sollbruchstelle aufweisen. Hierdurch können nach dem Fügeprozess die Wärmeisolatoren leicht entfernt werden, um gegebenenfalls eine weitere Isolation auf dem nicht ummantelten Rohrabschnitt anzubringen.

In bevorzugter Ausführungsform kann ein Bereich der Außenoberfläche als Wärmeeinbringzone kenntlich gemacht sein. Bei der geometrischen Ausführung des Fittinggrundkörpers bietet es sich an, einen mittigen Bereich als Wärmeeinbringzone zu definieren, an den jeweils seitlich ein oder mehrere Wärmeisolatoren angebracht werden. Bei Muffenverbindungen werden bevorzugt zwei, bei T-Stücken bevorzugt drei Wärmeisolatoren angebracht. Diese Wärmeisolatoren können beispielsweise in axialer Richtung aufgeschoben werden.

Eine möglichst zentral angeordnete Wärmeeinbringzone gewährleistet, dass die Wärmezufuhr nach beiden Seiten in Richtung der Einsteckabschnitte des Verbinders gleichmäßig erfolgt und daher nach dem Erwärmen des Verbinders die Wärmequelle bereits entfernt werden kann, bevor das Lot im Spalt zwischen Wärmeisolator und Rohroberftäche vollständig eingebracht wird. Es hat sich daher als vorteilhaft erwiesen, den Abstand zwischen Lötfläche und der Mitte der Wärmeeinbringzone für jede Bautype gleich zu gestalten, insbesondere bei T-Stücken.

Um den Wärmeeintrag während des Lötvorganges zu minimieren, kann es sich durchaus als sinnvoll erweisen, beispielsweise im Bereich der Wärmeeintragszone eine Kennzeichnung der Außenoberfläche des Rohrverbinders als Information für den Montierenden vorzunehmen. Es hat sich als zweckmäßig erwiesen, entweder eine Kennung vorzusehen, die in Abhängigkeit der Leistungsstärke eines Elektrowiderstandslötgerätes die Dauer für das Aufheizen vorgibt, bis die notwendige Temperatur zum Aufschmelzen des Lotes erreicht wird. Hierdurch kann sichergestellt werden, dass ein zu langes Erwärmen einer thermoplastischen Ummantelung der Rohrbauteile vermieden wird. Auch aus diesem Grund ist es zweckmäßig, den Verbinder symmetrisch zur Mitte der Wärmeeintragszone zu gestalten, um am jeweiligen Abgang gleiche Temperaturverhältnisse beim Aufwärmvorgang zu erreichen.

Vorteilhafterweise kann die Wärmeeinbringzone einen größeren Außendurchmesser als die Einsteckabschnitte aufweisen. Hierdurch wird ein Anschlag für die Wärmeisolatoren geschaffen.

Ausführungsbeispiele der Erfindung werden anhand einer schematischen Zeichnung näher erläutert.

### Darin zeigen:

- Fig. 1: einen Längsschnitt durch einen Rohrverbinder mit zwei auf dessen Einsteckabschnitte aufgeschobenen Metallrohren mit polymerer Ummantelung, und
- Fig. 2: einen Längsschnitt einer weiteren bevorzugten Ausführungsform eines Rohrverbinders mit aufgeschobenen Metallrohren mit polymerer Ummantelung.

Einander entsprechende Teile sind in allen Figuren mit denselben Bezugszeichen versehen.

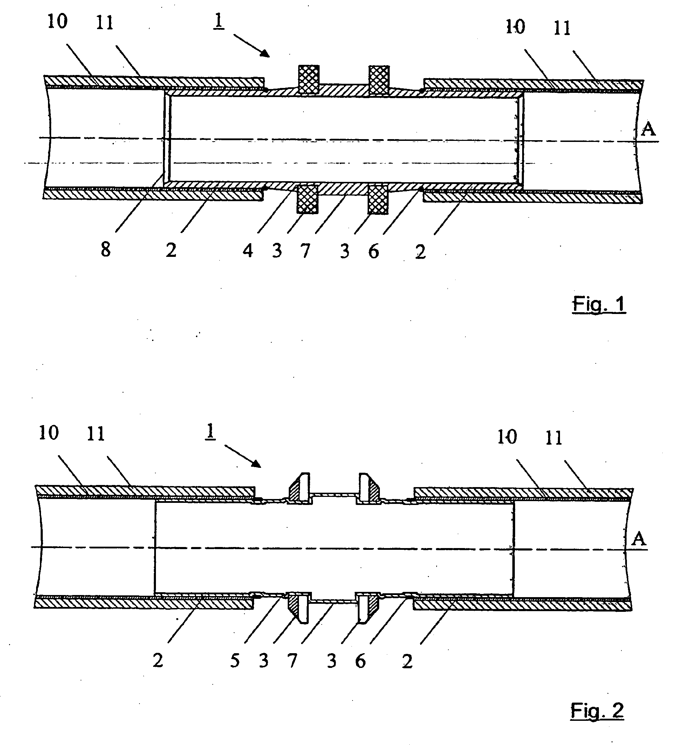

Fig. 1 zeigt einen Längsschnitt durch einen Rohrverbinder 1, auf dessen Einsteckabschnitte 2 zwei Metallrohre 10 mit polymerer Ummantelung 11 aufgeschoben sind. Der Außendurchmesser eines Einsteckabschnitts 2 ist dabei kleiner als der Innendurchmesser des jeweiligen Metallrohrs 10. Um den Außenumfang sind zwei umlaufende Wärmeisolatoren 3 voneinander beabstandet in einer Nut 4 angeordnet.

Der dargestellte scheibenförmige Wärmeisolator 3 ist gegenüber der Polymerschicht der Ummantelung 11 leicht erhöht und schützt so die Ummantelung 11 vor thermischen Einflüssen beim Fügen der Metallrohre 10.

Der Bereich zwischen den beiden beabstandeten Wärmeisolatoren 3 des Verbinders dient als Wärmeeinbringzone 7, in der beispielsweise die Kontaktflächen eines Elektrowiderstandslötgerätes positioniert werden können, um Wärme in das Bauteil einzubringen.

Um den Lötvorgang zu erleichtern, ist ein ringförmig umlaufendes Lotdepot 6 in einer Nut auf der Außenseite des Rohrverbinders 1 angebracht. Das Anbringen eines nutförmigen Lotdepots 6 bietet den Vorteil, dass es zu keiner Querschnittsverengung im Inneren des Rohrverbinders 1 kommt. In diesem Falle dient das Lotdepot 6 auch als Einschubanschlag für das aufzusteckende Rohr 10.

Die Enden des eingesteckten Rohrverbinders 1 sind mit einer Fase 8 versehen, so dass es am Ende des Rohrverbinders 1 beim Übergang ins Rohr 10 zu möglichst wenig Verwirbelungen und Turbulenzen bei der Durchströmung durch ein Medium kommt.

Fig. 2 zeigt einen Längsschnitt einer weiteren bevorzugten Ausführungsform eines Rohrverbinders 1 mit aufgeschobenen Metallrohren 10 mit polymerer Ummantelung 11. Die zwei um den Außenumfang umlaufenden Wärmeisolatoren 3 sind wiederum voneinander beabstandet in einer Nut 4 angeordnet und jeweils über einen außenseitigen Noppen 5 arretiert. Die Wärmeeinbringzone 7 hat einen größeren Außendurchmesser als die Einsteckabschnitte 2.

Ebenfalls sind ringförmige umlaufende Lotdepots 6 auf der Außenseite des Rohrverbinders 1 im Einsteckabschnitt 2 angeordnet, wobei die Lotdepots 6 so gestaltet sind, dass sie vor dem Aufschmelzen des Lotes im Fügevorgang einen Anschlag für die Metallrohre 10 bilden.

Fig. 2 zeigt demnach den Ausgangszustand von nur zum Teil aufgesteckten Metallrohren 10 unmittelbar vor dem thermischen Fügeverfahren. Sobald unter thermischer Einwirkung zum Verbinden das Lotdepot 6 schmilzt und sich das Lot im Lötspalt unter Kapillarwirkung verteilt, wird der zunächst durch das leicht erhöhte Lotdepot gebildete mechanische Anschlag freigegeben. Sofern benötigt, kann auch von außen noch zusätzliches Lot zugeführt werden. Sobald sich das Lotmaterial verteilt hat, können beide Metallrohre 10 bis zum Wärmeisolator 3 aufgeschoben werden, wobei der Wärmeeintrag unmittelbar vor oder nach dem Zusammenschieben der Metallrohre 10 unterbrochen wird. Für die Metallrohre 10 ist der mechanische Anschlag im Endzustand also die jeweilige außenseitige Fläche der Wärmeisolatoren 3 bzw. der Noppen 5. Auf diese Weise lässt sich ein durch den Abstand der Wärmeisolatoren 3 vergleichsweise geringer Restspalt im gelöteten Endzustand erreichen. Um diese Fügevariante weiterzubilden, erweist sich auch eine zumindest partielle Verzinnung der Außenoberfläche des Rohrverbinders 1 als vorteilhaft.

Denkbar ist auch, sofern die Wärmeeinbringzone 7 keinen größeren Außendurchmesser als die Einsteckabschnitte 2 aufweist, dass eine Lötvorrichtung nach dem Schmelzen des Lotes wieder entfernt wird und die eingebrachte Restwärme das Lot noch eine gewisse Zeit schmelzflüssig hält. In diesem Zeitraum können die Metallrohre 10 mit polymerer Ummantelung 11 vollständig zusammengeschoben werden. Hierbei werden die zwei Wärmeisolatoren 3 im Verbund eingequetscht. Sofern diese beispielsweise jedoch durch Sprödbruch, beispielsweise an einer Sollbruchstelle, unter Belastung abbrechen, ist es vorteilhafterweise sogar möglich, beide Rohrenden bis zum vollständigen Verschluss der ursprünglichen Wärmeeinbringzone 7 zusammenzuführen. Da die polymere Ummantelung 11 der Metallrohre 10 den ursprünglichen Spalt verschließt, wird dann keine weitere Isolation benötigt.

### Bezugszeichenliste

- 1: Rohrverbinder
- 2: Einsteckabschnitte
- 3: Wärmeisolator
- 4: Nut
- 5: Noppen
- 6: Lotdepot
- 7: Wärmeeinbringzone
- 8: Fase

- 10: Metallrohr
- 11: polymerer Ummantelung

- A: Rohrachse

## Patentansprüche

1. Metallischer Rohrverbinder (1)
- mit Einsteckabschnitten (2) zum Verbinden von Metallrohren (10) mit polymerer Ummantelung (11) mittels eines thermischen Fügeverfahrens, wobei der Außendurchmesser eines Einsteckabschnitts (2) kleiner ist als der Innendurchmesser des verbindbaren Metallrohrs (10),
- mit einer zwischen den Einsteckabschnitten in einem mittigen Bereich angeordneten Wärmeeinbringzone (7), wodurch eine Wärmezufuhr in Richtung der Einsteckabschnitte gleichmäßig erfolgen kann,
**dadurch gekennzeichnet,**
- **dass** um den Außenumfang des Rohrverbinders ein oder mehrere umlaufende Wärmeisolatoren (3) zwischen der Wärmeeinbringzone (7) und den Einsteckabschnitten angeordnet sind.

2. Metallischer Rohrverbinder nach Anspruch 1, **dadurch gekennzeichnet, dass** die Wärmeisolatoren in einer Nut (4), einer Sicke oder durch Noppen (5) am Außenumfang arretiert sind.

3. Metallischer Rohrverbinder nach Anspruch 1 oder, **dadurch gekennzeichnet, dass** die Wärmeisolatoren (3) als Scheibe ausgebildet sind.

4. Metallischer Rohrverbinder nach einem der Ansprüche 1 bis 3, **dadurch gekennzeichnet, dass** die Wärmeisolatoren (3) als geschlitzte Scheibe ausgebildet sind.

5. Metallischer Rohrverbinder nach Anspruch 4, **dadurch gekennzeichnet, dass** die geschlitzte Scheibe mit überlappenden Enden ausgebildet ist.

6. Metallischer Rohrverbinder nach einem der Ansprüche 1 bis 5, **dadurch gekennzeichnet, dass** der beschreibende Umkreis eines Wärmeisolators (3) nicht mehr als 30 % größer ist als der Außendurchmesser der Ummantelung (11) des zu verbindenden Metallrohres (10).

7. Metallischer Rohrverbinder nach einem der Ansprüche 1 bis 6, **dadurch gekennzeichnet, dass** sich die Dicke des Wärmeisolators (3) in radialer Richtung nach außen verringert.

8. Metallischer Rohrverbinder nach einem der Ansprüche 1 bis 7, **dadurch gekennzeichnet, dass** die metallische Außenoberfläche eine ganzflächige Verzinnung aufweist.

9. Metallischer Rohrverbinder nach einem der Ansprüche 1 bis 7, **dadurch gekennzeichnet, dass** die metallische Außenoberfläche eine partielle Verzinnung aufweist.

10. Metallischer Rohrverbinder nach einem der Ansprüche 1 bis 9, **dadurch gekennzeichnet, dass** die Wärmeisolatoren (3) aus einem keramischen Werkstoff bestehen.

11. Metallischer Rohrverbinder nach einem der Ansprüche 1 bis 9, **dadurch gekennzeichnet, dass** die Wärmeisolatoren (3) aus einem polymeren Werkstoff bestehen.

12. Metallischer Rohrverbinder nach Anspruch 11, **dadurch gekennzeichnet, dass** die Wärmeisolatoren (3) aus Teflon bestehen.

13. Metallischer Rohrverbinder nach einem der Ansprüche 1 bis 12, **dadurch gekennzeichnet, dass** die Wärmeisolatoren (3) eine Sollbruchstelle aufweisen.

14. Metallischer Rohrverbinder nach einem der Ansprüche 1 bis 13, **dadurch gekennzeichnet, dass** ein Bereich der Außenoberfläche als Wärmeeinbringzone (7) kenntlich gemacht ist.

15. Metallischer Rohrverbinder nach Anspruch 14, **dadurch gekennzeichnet, dass** die Wärmeeinbringzone (7) einen größeren Außendurchmesser als die Einsteckabschnitte (2) aufweist.

## Claims

1. Metal pipe connector (1),
- having insertion portions (2) for connecting metal pipes (10) with a polymer covering (11) by means of a thermal joining method, the outer diameter of an insertion portion (2) being smaller than the inner diameter of the connectable metal pipe (10),
- having a heat introduction zone (7) which is arranged in a central zone between the insertion portions, whereby a heat supply in the direction of the insertion portions can take place in a uniform manner,
**characterised in that**
one or more peripheral thermal insulators (3) are arranged around the outer periphery of the pipe connector, between the heat introduction zone (7) and the insertion portions.

2. Metal pipe connector according to claim 1, **characterised in that** the thermal insulators are secured in a groove (4), a bead or knobs (5) on the outer periphery.

3. Metal pipe connector according to claim 1 or claim 2, **characterised in that** the thermal insulators (3) are constructed as a disc.

4. Metal pipe connector according to any one of claims 1 to 3, **characterised in that** the thermal insulators (3) are constructed as a slotted disc.

5. Metal pipe connector according to claim 4, **characterised in that** the slotted disc is constructed with overlapping ends.

6. Metal pipe connector according to any one of claims 1 to 5, **characterised in that** the circumcircle of a thermal insulator (3) is not more than 30% greater than the outer diameter of the covering (11) of the metal pipe (10) to be connected.

7. Metal pipe connector according to any one of claims 1 to 6, **characterised in that** the thickness of the thermal insulator (3) decreases outwards in a radial direction.

8. Metal pipe connector according to any one of claims 1 to 7, **characterised in that** the metal outer surface is completely tin-plated.

9. Metal pipe connector according to any one of claims 1 to 7, **characterised in that** the metal outer surface is partially tin-plated.

10. Metal pipe connector according to any one of claims 1 to 9, **characterised in that** the thermal insulators (3) comprise a ceramic material.

11. Metal pipe connector according to any one of claims 1 to 9, **characterised in that** the thermal insulators (3) comprise a polymer material.

12. Metal pipe connector according to claim 11, **characterised in that** the thermal insulators (3) comprise Teflon.

13. Metal pipe connector according to any one of claims 1 to 12, **characterised in that** the thermal insulators (3) have a desired breaking point.

14. Metal pipe connector according to any one of claims 1 to 13, **characterised in that** a region of the outer surface is made identifiable as the heat introduction zone (7).

15. Metal pipe connector according to claim 14, **characterised in that** the heat introduction zone (7) has a larger outer diameter than the insertion portions (2).

## Revendications

1. Raccord métallique (1) d'assemblage de tubes,
- comprenant des tronçons d'emmanchement (2) pour relier ou assembler des tubes métalliques (10), qui présentent une enveloppe de revêtement (11) en polymère, au moyen d'un procédé d'assemblage thermique, le diamètre extérieur d'un tronçon d'emmanchement (2) étant inférieur au diamètre intérieur du tube métallique (10) pouvant être relié ou assemblé,
- et comprenant également une zone d'introduction de chaleur (7) qui est agencée entre les tronçons d'emmanchement, dans une zone centrale, et permet d'effectuer une amenée régulière de chaleur en direction des tronçons d'emmanchement,
**caractérisé**
- **en ce qu'**autour de la périphérie extérieure du raccord d'assemblage de tubes, sont agencés un ou plusieurs isolateurs de chaleur (3), entre la zone d'introduction de chaleur (7) et les tronçons d'emmanchement.

2. Raccord métallique d'assemblage de tubes selon la revendication 1, **caractérisé en ce que** les isolateurs de chaleur sont arrêtés ou bloqués dans une rainure (4), une moulure, ou par des plots (5) sur la périphérie extérieur.

3. Raccord métallique d'assemblage de tubes selon la revendication 1 ou la revendication 2, **caractérisé en ce que** les isolateurs de chaleur (3) sont réalisée sous forme de disque ou rondelle.

4. Raccord métallique d'assemblage de tubes selon l'une des revendications 1 à 3, **caractérisé en ce que** les isolateurs de chaleur (3) sont réalisés sous forme de rondelle fendue.

5. Raccord métallique d'assemblage de tubes selon la revendication 4, **caractérisé en ce que** la rondelle fendue est réalisée avec des extrémités qui se chevauchent mutuellement.

6. Raccord métallique d'assemblage de tubes selon l'une des revendications 1 à 5, **caractérisé en ce que** le cercle circonscrit à un isolateur de chaleur (3) n'est pas supérieur de plus de 30% au diamètre extérieur de l'enveloppe de revêtement (11) du tube métallique (10) à assembler.

7. Raccord métallique d'assemblage de tubes selon l'une des revendications 1 à 6, **caractérisé en ce que** l'épaisseur de l'isolateur de chaleur (3) se réduit en direction radiale vers l'extérieur.

8. Raccord métallique d'assemblage de tubes selon l'une des revendications 1 à 7, **caractérisé en ce que** la surface extérieure métallique présente un étamage de la surface totale.

9. Raccord métallique d'assemblage de tubes selon l'une des revendications 1 à 7, **caractérisé en ce que** la surface extérieure métallique présente un étamage partiel.

10. Raccord métallique d'assemblage de tubes selon l'une des revendications 1 à 9, **caractérisé en ce que** les isolateurs de chaleur (3) sont réalisés en un matériau
céramique.

11. Raccord métallique d'assemblage de tubes selon l'une des revendications 1 à 9, **caractérisé en ce que** les isolateurs de chaleur (3) sont réalisés en un matériau polymère.

12. Raccord métallique d'assemblage de tubes selon la revendication 11, **caractérisé en ce que** les isolateurs de chaleur (3) sont réalisés en «Téflon» (polytétrafluoroéthylène).

13. Raccord métallique d'assemblage de tubes selon l'une des revendications 1 à 12, **caractérisé en ce que** les isolateurs de chaleur (3) présentent une zone de rupture programmée.

14. Raccord métallique d'assemblage de tubes selon l'une des revendications 1 à 13, **caractérisé en ce qu'**une zone de la surface extérieure est rendue identifiable en tant que surface d'introduction de chaleur (7).

15. Raccord métallique d'assemblage de tubes selon la revendication 14, **caractérisé en ce que** la zone d'introduction de chaleur (7) présente un diamètre extérieur plus grand que celui des tronçons d'emmanchement (2).
